# EUROPEAN PATENT APPLICATION

(11) **EP 4 585 057 A1**
(43) Date of publication of application: **16.07.2025**
(21) Application number: 23862867.1
(22) Date of filing: 09.08.2023
(51) Int. Cl.: A23P 30/00, B01J 35/00

(54) **FOOD PROCESSING DEVICE AND OPERATION METHOD OF FOOD PROCESSING DEVICE**

(30) Priority: 07.09.2022 JP 2022141841
(71) Applicant: Panasonic Intellectual Property Management Co., Ltd., Kadoma-shi, Osaka 571-0057 (JP)
(72) Inventor: UKAI, Kunihiro, Kadoma-shi, Osaka 571-0057 (JP); HASHIMOTO, Yasuhiro, Kadoma-shi, Osaka 571-0057 (JP); YAMAJI, Satoru, Kadoma-shi, Osaka 571-0057 (JP); INO, Daisuke, Kadoma-shi, Osaka 571-0057 (JP)
(74) Representative: Grünecker Patent- und Rechtsanwälte PartG mbB
(86) International application number: PCT/JP2023/029061
(87) International publication number: WO 2024/053325

(57) **Abstract**

A food processing apparatus (100) includes: a reaction tank (1) that contains a reaction liquid (13a) including a food ingredient; a reaction pipe (7) that is disposed in the reaction tank (1) and on whose outer surface a photocatalyst (included in a thin film layer (9)) is provided; a light source (8) that irradiates the photocatalyst with light from inside of the reaction pipe (7); a dissolved oxygen concentration measurer (dissolved oxygen meter (28)) that measures a dissolved oxygen concentration in the reaction liquid (13a); and a controller (19) that stops light irradiation from the light source (8) if a measured dissolved oxygen concentration exceeds a preset first dissolved oxygen concentration.

## Description

### Technical Field

The present disclosure relates to a food processing apparatus and a method of operating a food processing apparatus.

### Background Art

PTL 1 discloses a sterilizer that kills microorganisms in a brewed product at room temperature by using a photocatalyst and without heating the brewed product. On the other hand, food processing apparatuses for modifying a reactant, which is a food ingredient, by using a photocatalyst have been developed (see, for example, PTL 2).

### Citation List

### Patent Literature

PTL 1: Japanese Unexamined Patent Application Publication No. 2003-250514
PTL 2: International Publication No. 2022/097668

### Summary of Invention

However, the sterilizer described in PTL 1 has room for improvement when it is used to modify a food ingredient as described in PTL 2. For example, it may be difficult for the sterilizer described in PTL 1 to effectively modify a food ingredient.

The present disclosure provides a food processing apparatus and a method of operating a food processing apparatus that can effectively modify a food ingredient by using a photocatalyst.

A food processing apparatus according to an aspect of the present disclosure includes a reaction tank that contains a reaction liquid including a food ingredient, a reaction pipe that is disposed in the reaction tank and on whose outer surface a photocatalyst is provided, a light source that irradiates the photocatalyst with light from inside of the reaction pipe, a dissolved oxygen concentration measurer that measures a dissolved oxygen concentration in the reaction liquid, and a controller that stops light irradiation from the light source if a measured dissolved oxygen concentration exceeds a preset first dissolved oxygen concentration.

A method of operating a food processing apparatus according to an aspect of the present disclosure is a method of operating a food processing apparatus, the apparatus including a reaction tank that contains a reaction liquid including a food ingredient, a reaction pipe that is disposed in the reaction tank and on whose outer surface a photocatalyst is provided, a light source that irradiates the photocatalyst with light from inside of the reaction pipe, and a dissolved oxygen concentration measurer that measures a dissolved oxygen concentration in the reaction liquid, the method including stopping light irradiation from the light source if a measured dissolved oxygen concentration exceeds a preset first dissolved oxygen concentration.

It should be noted that general or specific embodiments may be implemented as a system, a method, an integrated circuit, a computer program, or a non-transitory computer-readable storage medium such as a CD-ROM, or may be implemented as any selective combination of a system, a method, an integrated circuit, a computer program, and a non-transitory storage medium.

A food processing apparatus and a method of operating a food processing apparatus according to an aspect of the present disclosure can effectively modify a food ingredient.

### Brief Description of Drawings

[Fig. 1] Fig. 1 is a sectional view of a food processing apparatus according to an embodiment.
[Fig. 2] Fig. 2 is a plan view of the food processing apparatus according to the embodiment.
[Fig. 3] Fig. 3 is sectional view of a catalytic reactor according to the embodiment.
[Fig. 4] Fig. 4 is a sectional view of a food processing apparatus according to a first modification of the present embodiment.
[Fig. 5] Fig. 5 is a sectional view of a food processing apparatus according to a second modification of the present embodiment.
[Fig. 6] Fig. 6 is a flowchart illustrating a method of operating a food processing apparatus according to an embodiment.
[Fig. 7] Fig. 7 is a graph illustrating the change over time of the cumulative amount of product and the dissolved oxygen concentration.

### Description of Embodiments

### (Underlying Knowledge Forming Basis of the Present Disclosure)

In food production, modification of a food ingredient is widely practiced for the purposes of improving production efficiency, increasing nutrient content, and the like. For example, PTL 2 discloses a food processing apparatus that can be used, for example, to decompose protein in an ingredient or to decompose sugars in wort beforehand.

Catalysts are used in some of such methods for modifying a food ingredient. For example, in some methods for producing margarine, a nickel catalyst is used to hydrogenate oil and fat components, which are ingredients. Use of an immobilized enzyme in food production can be regarded as use of a catalyst.

Aside from the viewpoint of modification of a food ingredient, a catalyst may be used for the purpose of sterilization in a food production process. For example, PTL 1 discloses a sterilizer that kills microorganisms in a brewed product at room temperature by using a photocatalyst and without heating the brewed product.

However, it is difficult to effectively modify a food ingredient by using such a sterilizer, which uses a photocatalyst for the purpose of sterilization, to modify the food ingredient.

In particular, to produce food by using a photocatalyst, it is necessary to perform the operation at a temperature lower than or equal to room temperature in view of suppressing deterioration of food and the like. In this case, condensation occurs in a reaction tank, because the food ingredient in the reaction tank is cooled. As a result, it is probable that the amount of a reaction liquid, which is composed of the ingredient and water, will increase and negatively affect the reactivity. In order to suppress condensation, it is possible to use, for example, a method of suppressing flow of air into the reaction tank from the outside of the food processing apparatus (hereafter, the air outside of the food processing apparatus will be referred to as the outside gas).

In general, a modification reaction using a photocatalyst is an oxidation reaction by addition of oxygen, and thus is a reaction in which oxygen is consumed. As the modification reaction using a photocatalyst progresses, oxygen in a reaction tank is consumed, and a target product is gradually accumulated in the reaction tank (main reaction). On the other hand, when the photocatalyst reaction is continued while the target product has been accumulated to some degree, a reaction in which another substance (by-product) is generated while consuming the target product and oxygen (side reaction) progresses. The by-product generated by the side reaction is undesirable in food processing.

In order to efficiently modify food, it is necessary to decelerate the side reaction as much as possible while accelerating the forward reaction as much as possible. When a catalytic reaction using a photocatalytic is applied to a food processing apparatus, a reaction time necessary for the reaction may changes considerably if a reaction condition that affects reactivity (for example, temperature, agitating state, or the light intensity of a light source) changes only slightly. Then, as described above, it becomes highly probable that the photocatalyst processing cannot be finished within an appropriate time, the side reaction will progress as a target main reaction decelerates, and an unexpected by-product will be generated.

The photocatalytic reaction can be stopped by stopping irradiation of a catalytic substance with light. However, since the main reaction and the side reaction progress in a mixed manner in the reaction system, it is difficult to determine the timing for stopping light irradiation. Although monitoring of the cumulative amount of a target product may be considered, it may not be easy to measure the cumulative amount depending on the type of the target product. Therefore, it is still difficult to measure the timing for stopping the reaction (stopping light irradiation) while monitoring the cumulative amount of the target product in parallel with the catalytic reaction. That is, it is necessary to stop the catalytic reaction appropriately in the operation of a food processing apparatus including a photocatalyst, and there is room for improvement in the timing for stopping the catalytic reaction.

The present disclosure provides a food processing apparatus and a method of operating a food processing apparatus that can appropriately stop a catalytic reaction when modifying a food ingredient in a reaction tank by using a photocatalyst.

A food processing apparatus according to a first aspect of the present disclosure includes a reaction tank that contains a reaction liquid including a food ingredient, a reaction pipe that is disposed in the reaction tank and on whose outer surface a photocatalyst is provided, a light source that irradiates the photocatalyst with light from inside of the reaction pipe, a dissolved oxygen concentration measurer that measures a dissolved oxygen concentration in the reaction liquid, and a controller that stops light irradiation from the light source if a measured dissolved oxygen concentration exceeds a preset first dissolved oxygen concentration.

With this aspect, it is possible to measure, based on decrease of consumption of dissolved oxygen, the timing when a side reaction starts to progress dominantly over the main reaction in which the photocatalyst consumes dissolved oxygen. Since the dissolved oxygen gradually increases as an oxygen-containing gas is supplied even when the dissolved oxygen is consumed, decrease of consumption can be regarded as relative increase of the dissolved oxygen concentration. Thus, by continuing or stopping the reaction depending on whether or not the dissolved oxygen concentration exceeds the first dissolved oxygen concentration that has been set beforehand in accordance with the balance between the main reaction and the side reaction appropriate for stopping of the reaction, it is possible to realize a food processing apparatus that can effectively modify a food ingredient.

A food processing apparatus according to a second aspect is the food processing apparatus according to the first aspect, in which the controller stops light irradiation from the light source if decrease of the measured dissolved oxygen concentration is detected, increase of the measured dissolved oxygen concentration is detected after detection of the decrease and the measured dissolved oxygen concentration exceeds the first dissolved oxygen concentration after detection of the increase.

With this aspect, it is possible to stop the reaction on condition that the reaction has progressed normally by detecting decrease of the dissolved oxygen concentration due to consumption of dissolved oxygen, detecting increase of the dissolved oxygen concentration due to decrease of consumption of dissolved oxygen, and continuing or stopping the reaction depending on whether or not the dissolved oxygen concentration exceeds the first dissolved oxygen concentration. As an example, it is possible to stop the reaction as described above if all of the followings are satisfied: a first concentration of dissolved oxygen measured at a first time that is the earliest is higher than a second concentration of dissolved oxygen measured at a second time point that is later than the first time point; a third concentration of dissolved oxygen measured at a third time point that is later than the second time point is lower than a fourth concentration of dissolved oxygen measured at a fourth time point that is later than the third time point; and a fifth concentration of dissolved oxygen measured at a fifth time point that is later than the fourth time point is higher than the first dissolved oxygen concentration.

A food processing apparatus according to a third aspect is the food processing apparatus according to the first or second aspect, in which the controller stops light irradiation from the light source if the measured dissolved oxygen concentration exceeds the first dissolved oxygen concentration after a time for which light irradiation is performed becomes longer than a preset first light irradiation time.

With this aspect, it is possible to suppress the reaction from being stopped if the measured dissolved oxygen concentration exceeds the first dissolved oxygen concentration before the first light irradiation time.

A food processing apparatus according to a fourth aspect is the food processing apparatus according to the third aspect, further including a storage that stores an irradiation time representing an elapsed time from start to stop of light irradiation in a past operation of the food processing apparatus, in which the controller sets, as the first light irradiation time, the irradiation time in an operation of the food processing apparatus a predetermined period or more ago stored in the storage.

With this aspect, it is possible to use, as the first light irradiation time, the irradiation time representing the elapsed time from start to stop of light irradiation in a past operation of the food processing apparatus.

A food processing apparatus according to a fifth aspect is the food processing apparatus according to the third or fourth aspect, in which the controller outputs abnormality information indicating abnormality of at least one of the food processing apparatus and the reaction liquid if the measured dissolved oxygen concentration does not exceed the first dissolved oxygen concentration even when the time for which light irradiation is performed becomes longer than a preset second light irradiation time that is longer than the first light irradiation time.

With this aspect, it is possible to output abnormality information indicating abnormality if the reaction is too slow and thus the condition for stopping the reaction is not satisfied even when the light irradiation time becomes longer than the second light irradiation time.

A food processing apparatus according to a sixth aspect is the food processing apparatus according to any one of the first to fifth aspects, further including a gas supplier that supplies an oxygen-containing gas into the reaction tank, in which the controller controls the gas supplier to cause the gas supplier to supply the oxygen-containing gas into the reaction tank.

With this aspect, it is possible to supply an oxygen-containing gas into the reaction tank.

A food processing apparatus according to a seventh aspect is the food processing apparatus according to the sixth aspect, in which the controller controls the gas supplier to cause the gas supplier to supply the oxygen-containing gas into the reaction tank if the measured dissolved oxygen concentration falls below a preset second dissolved oxygen concentration that is lower than the first dissolved oxygen concentration.

With this aspect, it is possible to supply an oxygen-containing gas into the reaction tank if the measured dissolved oxygen concentration falls below the second dissolved oxygen concentration that is lower than the first dissolved oxygen concentration.

A food processing apparatus according to an eighth aspect is the food processing apparatus according to the seventh aspect, in which the controller outputs abnormality information indicating abnormality of at least one of the food processing apparatus and the reaction liquid if decrease of the measured dissolved oxygen concentration is not detected or if decrease of the measured dissolved oxygen concentration is detected and the measured dissolved oxygen concentration does not fall below the second dissolved oxygen concentration after detection of the decrease.

With this aspect, it is possible to output abnormality information indicating abnormality if the measured value does not fall below the second dissolved oxygen concentration below which the measured value is supposed to fall.

A food processing apparatus according to a ninth aspect is the food processing apparatus according to any one the first to eighth aspects, further including a temperature adjuster that adjusts a temperature of the reaction liquid contained in the reaction tank.

With this aspect, it is possible to adjust the temperature of the reaction liquid contained in the reaction tank.

A food processing apparatus according to a tenth aspect is the food processing apparatus according to any one the first to ninth aspects, further including an agitator that agitates a reactant in the reaction tank.

With this aspect, it is possible to agitate the reactant in the reaction tank.

A method of operating a food processing apparatus according to an eleventh aspect is a method of operating a food processing apparatus, the apparatus including a reaction tank that contains a reaction liquid including a food ingredient, a reaction pipe that is disposed in the reaction tank and on whose outer surface a photocatalyst is provided, a light source that irradiates the photocatalyst with light from inside of the reaction pipe, and a dissolved oxygen concentration measurer that measures a dissolved oxygen concentration in the reaction liquid, the method including stopping light irradiation from the light source if a measured dissolved oxygen concentration exceeds a preset first dissolved oxygen concentration.

This aspect provides advantageous effects similar to those of the food processing apparatuses described above.

Hereafter, such a food processing apparatus and a method of operating a food processing apparatus will be described based on embodiments with reference to the drawings.

The embodiments described below are each a general or specific example. Thus, shapes, materials, elements, arrangements of elements, and connection configurations, and the like in the following description are examples, and do not limit the present disclosure. Descriptions of elements denoted by the same numerals in the drawings may be omitted. The drawings schematically illustrate elements for ease of understanding, and shapes, dimensional ratios, and the like may not be illustrated accurately.

### (Embodiments)

### [Configuration]

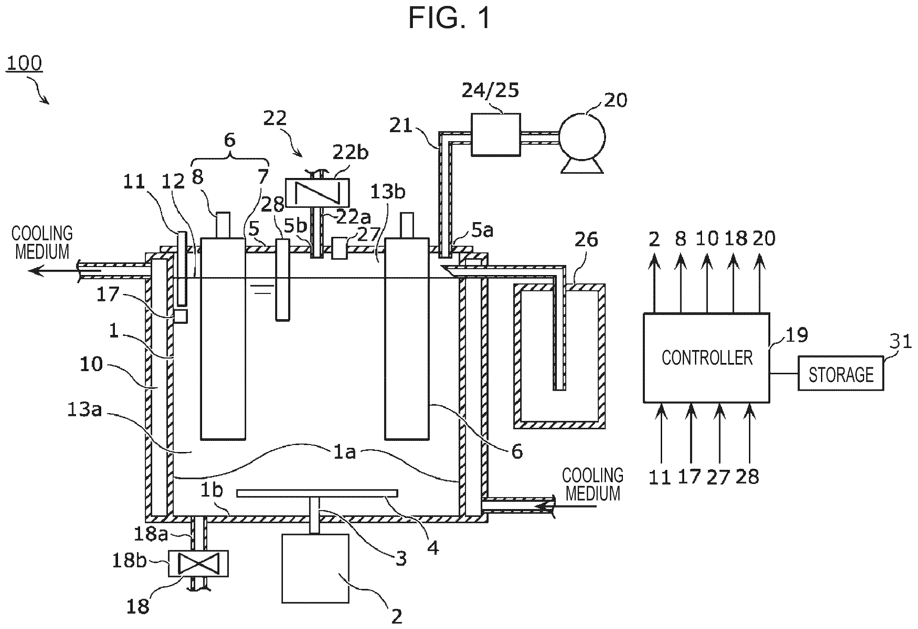

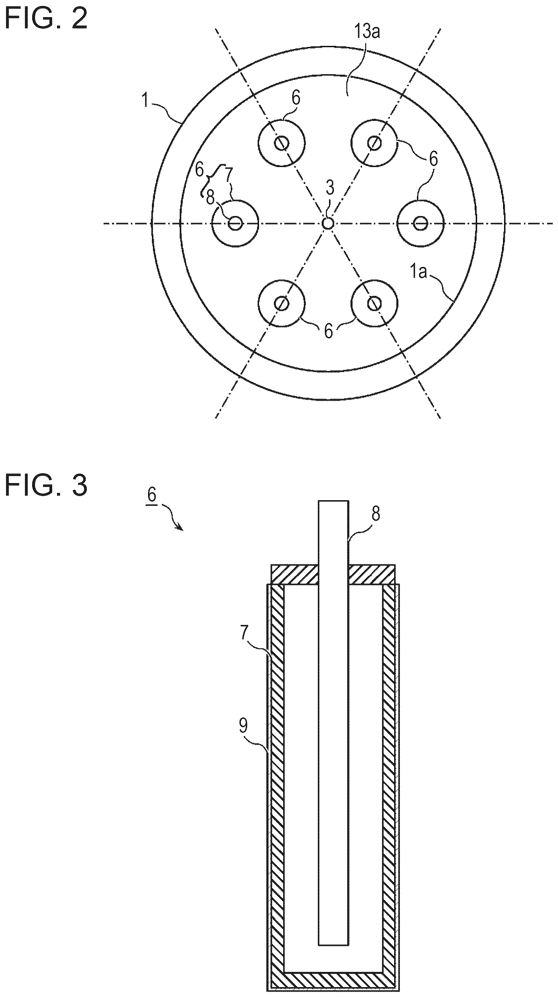

First, referring to Figs. 1 to 5, the configuration of a food processing apparatus 100 according to a first embodiment will be described. Fig. 1 is a sectional view of the food processing apparatus 100 according to the present embodiment. Fig. 2 is a plan view of the food processing apparatus 100 according to the present embodiment. Fig. 3 is sectional view of a catalytic reactor 6 according to the present embodiment.

As illustrated in Fig. 1, the food processing apparatus 100 includes a reaction tank 1, an agitator 2, a lid 5, catalytic reactors 6, a cooler 10, a liquid surface sensor 11, a temperature sensor 17, a liquid discharger 18, a controller 19, an air pump 20, a gas supply pipe 21, a gas discharger 22, a dehumidifier 24, a temperature adjuster 25, a drain 26, an oxygen concentration meter 27, a dissolved oxygen meter 28, and a storage 31. Hereafter, the elements of the food processing apparatus 100 will be described in order.

The reaction tank 1 is a container that has a tubular shape with a bottom and that contains a reaction liquid 13a including a food ingredient that is a reactant. In the present embodiment, the reaction tank 1 has a cylindrical shape and is composed of a side wall 1a and a bottom 1b. When the reaction liquid 13a is contained in the reaction tank 1, a space 13b filled with a gas is formed in an upper part of the reaction tank 1. The boundary surface between the reaction liquid 13a and the space 13b will be referred to as a liquid surface or a gas-liquid interface 12.

The agitator 2 is an example of an agitator, and can agitate the reaction liquid 13a in the reaction tank 1. The agitator 2 includes a rotation shaft 3 and an impeller 4.

The rotation shaft 3 is rotatably supported and extends through the bottom 1b of the reaction tank 1. The rotation shaft 3 is rotated by a power source (not shown). In the present embodiment, since the reaction tank 1 has a cylindrical shape, the rotation shaft 3 is set so as to coincide with the cylinder axis of the reaction tank 1.

The impeller 4 is disposed in the reaction tank 1. The impeller 4 is attached to the rotation shaft 3 and rotates together with the rotation shaft 3. As the impeller 4, a pitched paddle impeller can be used. However, the impeller 4 is not limited to a pitched paddle impeller. As the shape of the impeller 4, an optimal shape may be selected based on the viscosity of the reaction liquid 13a, the power source of the agitator 2, and the like. For example, as the impeller 4, a propeller, a disc turbine, or a centrifugal impeller may be used.

The position(s) and the number of agitator(s) 2 are not limited to the above. For example, the agitator 2 may be set on the lid 5 or the side wall 1a. Multiple agitators 2 may be included in the food processing apparatus 100. The agitator 2 is an optional element, and may be omitted.

The lid 5 closes the opening of the reaction tank 1. To be specific, the lid 5 is connected to an end portion of the side wall 1a. The gap between the lid 5 and the end portion of the side wall 1a is sealed with a sealing member (not shown) to keep the hermeticity of the space 13b in the reaction tank 1. As the sealing member, for example, a rubber O-ring or the like can be used.

The catalytic reactors 6 are set on the lid 5 and disposed in the reaction tank 1. The catalytic reactors 6 are arranged with a space therebetween so that the reaction liquid 13a can pass through the space. As illustrated in Fig. 2, in the present embodiment, six catalytic reactors 6 are arranged rotationally symmetrically around the rotation shaft 3 of the agitator 2 in plan view.

As illustrated in Fig. 3, each catalytic reactor 6 includes a reaction pipe 7 and a light source 8. The reaction pipe 7 is a glass structure having a cylindrical shape with a bottom. The reaction pipe 7 is inserted into a through-hole formed in the lid 5. The gap between the outer surface of the reaction pipe 7 and the lid 5 is sealed with a sealing member (not shown) to keep the hermeticity of the space 13b in the reaction tank 1. A thin film layer 9 of photocatalyst is provided on the outer surface of the reaction pipe 7. In the present embodiment, the thin film layer 9 of photocatalyst is made of titanium oxide (TiO₂).

The thin film layer 9 can be formed, for example, by using a general sol-gel method as follows. First, a sol-gel liquid is applied to the outer surface of the reaction pipe 7. Subsequently, the reaction pipe 7, to which the sol-gel liquid has been applied, is rotated by a rotary machine. Thus, the sol-gel liquid is uniformly applied over the entirety of the outer surface of the reaction pipe 7. After the sol-gel liquid applied to the reaction pipe 7 has been dried, the reaction pipe 7 is heated at a high temperature in an electric furnace. As a result, the thin film layer 9 of photocatalyst is fired onto the outer surface of the reaction pipe 7.

The light source 8 can irradiate the thin film layer 9 of photocatalyst with light from inside of the reaction pipe 7. The light source 8 is set in the reaction pipe 7 so as to face the thin film layer 9 of photocatalyst. Thus, the light source 8 can effectively irradiate the thin film layer 9 of photocatalyst with light. As the light source 8, for example, a highpressure mercury lamp, a fluorescent lamp, an LED (Light Emitting Diode), or the like can be used. The center wavelength of light emitted from the light source 8 is included in the wavelength range of 260 nm to 400 nm. Thus, the photocatalyst can effectively generate excitons. In the present embodiment, a fluorescent light that can emit light whose center wavelength is included in the ultraviolet wavelength range of 315 nm to 400 nm (UV-A) is used as the light source 8.

The cooler 10 can cool the reaction liquid 13a in the reaction tank 1. In the present embodiment, the cooler 10 can cool the reaction liquid 13a in the reaction tank 1 from the side wall 1a of the reaction tank 1. The side wall 1a of the reaction tank 1 has a double structure composed of an inner wall and an outer wall. The cooler 10 can cool the reaction liquid 13a in the reaction tank 1 by circulating a thermal medium for cooling (hereafter, referred to as a cooling medium) in the gap between the inner wall and the outer wall. The configuration of the cooler 10 is not limited to the configuration illustrated in Fig. 1. For example, the cooler 10 may be a heat exchanger disposed in the reaction tank 1.

The liquid surface sensor 11 is an example of a space maintainer, and can measure the amount of the reaction liquid 13a in the reaction tank 1 by detecting the height of the gas-liquid interface 12 in the reaction tank 1. As the liquid surface sensor 11, for example, a float level sensor can be used, but the liquid surface sensor 11 is not limited to this. The liquid surface sensor 11 is an optional element, and may be omitted.

The air pump 20 is an example of a gas supplier, and can supply an oxygen-containing gas into the reaction tank 1. In the present embodiment, the air pump 20 supplies the gas to the space 13b in the reaction tank 1 through the gas supply pipe 21, the dehumidifier 24, and the temperature adjuster 25. The oxygen-containing gas is not limited to air.

The gas supply pipe 21 is inserted into a through-hole 5a formed in the lid 5, and connects the air pump 20 to the reaction tank 1. The gap between the outer surface of the gas supply pipe 21 and the lid 5 is sealed with a sealing member (not shown) to keep the hermeticity of the space 13b in the reaction tank 1. As the gas supply pipe 21, a pipe and/or a tube can be used, but the gas supply pipe 21 is not limited to these. The gas supply pipe 21 is an optional element, and may be omitted. In this case, the air pump 20 may be directly connected to the reaction tank 1. The gas supply pipe 21 may be inserted, instead of into the through-hole 5a formed in the lid 5, into a through-hole formed in the side wall 1a of the reaction tank 1. In this case, the through-hole into which the gas supply pipe 21 is inserted may be provided at a position higher than the upper limit height of the gas-liquid interface 12 in the reaction tank 1.

The gas discharger 22 can discharge the gas in the reaction tank 1 to the outside of the reaction tank 1 through a through-hole 5b (an example of a second through-hole) formed in the lid 5 of the reaction tank 1. To be specific, the gas discharger 22 discharges the gas in the space 13b when the air pump 20 supplies a gas into the reaction tank 1 and the gas pressure in the space 13b increases. Thus, the gas pressure in the space 13b in the reaction tank 1 is maintained to be higher than that in the environment surrounding the food processing apparatus 100. That is, a positive pressure is maintained in the reaction tank 1. Thus, it is possible to suppress flow of the outside gas, except for the gas supplied by the air pump 20, into the reaction tank 1.

As illustrated in Fig. 1, the gas discharger 22 includes a gas discharge pipe 22a and a check valve 22b. The gas discharge pipe 22a is inserted into the through-hole 5b. The gap between the outer surface of the gas discharge pipe 22a and the lid 5 is sealed with a sealing member (not shown) to keep the hermeticity of the space 13b in the reaction tank 1. As the gas discharge pipe 22a, a pipe and/or a tube can be used, but the gas discharge pipe 22a is not limited to these. The gas discharge pipe 22a is an optional element, and may be omitted. In this case, the check valve 22b may be directly attached to the through-hole 5b of the lid 5. The gas discharge pipe 22a may be inserted, instead of into the through-hole 5b formed in the lid 5, into a through-hole formed in the side wall 1a of the reaction tank 1. In this case, the through-hole into which the gas discharge pipe 22a is inserted may be provided at a position higher than the upper limit height of the gas-liquid interface 12 in the reaction tank 1.

The check valve 22b is provided in the gas discharge pipe 22a, and allows a gas to flow in only one direction from inside of the reaction tank 1 to outside of the reaction tank 1. That is, the check valve 22b blocks flow of the gas from the outside of the reaction tank 1 to the inside of the reaction tank 1. Conversely, if the difference between the gas pressure in the reaction tank 1 and the gas pressure outside of the reaction tank 1 exceeds an opening pressure, the gas flows from inside of the reaction tank 1 to outside of the reaction tank 1. That is, if the difference between the pressure of the gas in the space 13b and the pressure of a gas outside of the reaction tank 1 exceeds the opening pressure as the air pump 20 supplies the gas into the reaction tank 1, the gas in the space 13b is discharged to the outside of the reaction tank 1 via the check valve 22b.

The configuration of the gas discharger 22 is not limited to the configuration illustrated in Fig. 1. For example, the gas discharger 22 may include, instead of the check valve 22b, an on-off valve. In this case, the on-off valve may be actively controlled in accordance with the pressure of the gas in the space 13b.

The dehumidifier 24 can dehumidify a gas supplied from the air pump 20. In the present embodiment, the dehumidifier 24 is provided in the gas supply pipe 21 and dehumidifies a gas that passes through the gas supply pipe 21. As the dehumidifier 24, a desiccant can be used. As the desiccant, a physical absorbent such as silica gel or zeolite and/or a chemical absorbent such as calcium oxide can be used, but the desiccant is not limited to this. Since the dehumidifier 24 dehumidifies the gas supplied from the air pump 20, it is possible to suppress condensation in the reaction tank 1. The dehumidifier 24 is an optional element, and may be omitted.

The temperature adjuster 25 can adjust the temperature of a gas supplied from the air pump 20. In the present embodiment, the temperature adjuster 25 is provided in the gas supply pipe 21 and adjusts the temperature of a gas that passes through the gas supply pipe 21. For example, if the temperature of the reaction liquid 13a is lower than outside gas temperature, the temperature adjuster 25 may cool the gas supplied from the air pump 20. Thus, it is possible to suppress increase of the temperature of the reaction liquid 13a by using the gas supplied from the air pump 20. Moreover, it is also possible to reduce moisture in the gas by cooling the gas, and it is also possible to suppress condensation in the reaction tank 1. The temperature adjuster 25, together with the cooler 10, is an example of a temperature adjuster that adjusts the temperature of the reaction liquid 13a contained in the reaction tank 1. The temperature adjuster 25 is an optional element, and may be omitted.

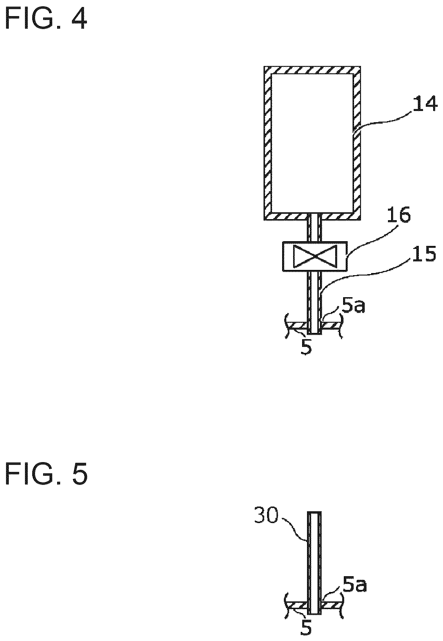

The configuration for supplying and discharging a gas, including the air pump 20, the gas supply pipe 21, the gas discharger 22, the dehumidifier 24, and the temperature adjuster 25, is an example. Fig. 4 is a sectional view of a food processing apparatus according to a first modification of the present embodiment. Fig. 5 is a sectional view of a food processing apparatus according to a second modification of the present embodiment. In Figs. 4 and 5, illustration of the configuration of the food processing apparatus 100, except for the configuration of a part near the through-hole 5a of the lid 5, is omitted.

For example, as illustrated in Fig. 4, a food processing apparatus may include a gas container 14, a communication pipe 15, and an on-off valve 16, instead of the air pump 20, the gas supply pipe 21, the gas discharger 22, the dehumidifier 24, and the temperature adjuster 25.

The gas container 14 is an example of a gas supplier, and can supply an oxygen-containing gas into the reaction tank 1. As the oxygen-containing gas, air can be used, but the oxygen-containing gas is not limited to this. For example, as the oxygen-containing gas, a gas having a higher oxygen concentration than air may be used. Thus, it is possible to efficiently supply oxygen into the reaction tank 1. The gas container 14 is connected to the space 13b in the reaction tank 1 through the communication pipe 15.

The communication pipe 15 is inserted to the through-hole 5a (an example of a first through-hole) formed in the lid 5, and allows the space in the gas container 14 and the space 13b in the reaction tank 1 to communicate. Thus, the gas in the reaction tank 1 and the gas in the gas container 14 can circulate. The gap between the lid 5 and the outer surface of the communication pipe 15 and the gap between the gas container 14 and the outer surface of the communication pipe 15 are each sealed with a sealing member (not shown) to keep the hermeticity of the reaction tank 1 and the gas container 14. As the communication pipe 15, a pipe and/or a tube can be used, but the communication pipe 15 is not limited to these.

The communication pipe 15 may be inserted, instead of into the through-hole 5a formed in the lid 5, into a through-hole formed in the side wall 1a of the reaction tank 1. In this case, the through-hole into which the communication pipe 15 is inserted may be provided at a position higher than the upper limit height of the gas-liquid interface 12 in the reaction tank 1. Thus, a gas can be supplied to the space 13b. Accordingly, compared with a case where a gas is supplied into the reaction liquid 13a, it is possible to suppress foaming that occurs at the liquid surface (the gas-liquid interface 12) of the reaction liquid 13a, and it is possible to suppress the reaction liquid 13a from adhering to the lid 5.

The upper limit height of the gas-liquid interface 12 may be determined beforehand by experience or by experiment so that the space 13b can have a sufficient volume that is necessary to supply oxygen to the reaction liquid 13a.

The communication pipe 15 is an optional element, and may be omitted. In this case, the gas container 14 may be attached to the reaction tank 1 directly, instead of via the communication pipe 15.

The on-off valve 16 is provided in the communication pipe 15, and can open and close the flow path in the communication pipe 15. As the on-off valve 16, an electromagnetic valve can be used, but the on-off valve 16 is not limited to this. The on-off valve 16 may adjust the flow rate in the communication pipe 15. The on-off valve 16 is an optional element, and may be omitted.

For example, as illustrated in Fig. 5, a food processing apparatus may include only a gas supply pipe 30, instead of the air pump 20, the gas supply pipe 21, the gas discharger 22, the dehumidifier 24, and the temperature adjuster 25.

The gas supply pipe 30 differs from the gas supply pipe 21 illustrated in Fig. 1 in that a gas that is actively supplied from the air pump 20 does not flow therethrough but a gas passively flows therethrough due to a change in internal pressure and density gradient in the reaction tank 1. Since the gas supply pipe 30 is configured in the same way as the gas supply pipe 21 in other respects, descriptions of the gas supply pipe 30 will be omitted here.

Referring back to Fig. 1, the drain 26 includes a pipe and a container that allow the reaction liquid 13a to flow to the outside of the reaction tank 1 when the liquid surface (the gas-liquid interface 12) of the reaction liquid 13a in the reaction tank 1 exceeds the upper limit height. The drain 26 discharges the reaction liquid 13a from the reaction tank 1 through a through-hole formed in the side wall 1a of the reaction tank 1. The height of the through-hole where the drain 26 is provided coincides with the upper limit height of the gas-liquid interface 12. Thus, the reaction liquid 13a only in an amount by which the gas-liquid interface 12 exceeds the upper limit height flows to the outside of the reaction tank 1 through the drain 26. Accordingly, even if condensation in the reaction tank 1 increases due to deterioration of sealing performance or the like, the space 13b can have a sufficient volume in the reaction tank 1. The gap between the outer surface of the drain 26 and the side wall 1a of the reaction tank 1 is sealed with a sealing member (not shown) to keep the hermeticity of the space 13b in the reaction tank 1. The drain 26 is an optional element, and may be omitted.

The oxygen concentration meter 27 can measure the oxygen concentration in the space 13b in the reaction tank 1. The oxygen concentration meter 27 is set on the side wall 1a of the reaction tank 1 or on the lid 5, and is disposed at a position higher than the upper limit height of the gas-liquid interface 12. As the oxygen concentration meter 27, for example, a zirconia oxygen concentration meter, a magnetic oxygen concentration meter, or a galvanic-cell oxygen concentration meter can be used, but the oxygen concentration meter 27 is not limited to these. The oxygen concentration meter 27 is an optional element, and may be omitted.

The dissolved oxygen meter 28 is an example of a dissolved oxygen concentration measurer, and can measure the concentration of oxygen dissolved in the reaction liquid 13a in the reaction tank 1. The dissolved oxygen meter 28 measures, for example, the concentration of oxygen dissolved in the reaction liquid 13a in the reaction tank 1 continuously (that is, over time) in the time domain. The dissolved oxygen meter 28 is set on the side wall 1a or on the bottom 1b of the reaction tank 1, and is disposed at a position lower than the upper limit height of the gas-liquid interface 12. The dissolved oxygen meter 28 can measure dissolved oxygen by using, for example, a diaphragm electrode method, but the measurement method is not limited to this.

The storage 31 is implemented in a semiconductor memory or the like, and stores information obtained in a past operation of the food processing apparatus 100. The controller 19 stores new information and reads out information stored in the storage 31 by accessing the storage 31.

The temperature sensor 17 is set in the reaction tank 1, and can detect the temperature of the reaction liquid 13a in the reaction tank 1. As the temperature sensor 17, for example, a thermocouple can be used, but the temperature sensor 17 is not limited to this. The temperature sensor 17 is an optional element, and may be omitted.

The liquid discharger 18 is an example of a space maintainer, and can discharge the reaction liquid 13a from a through-hole formed in the bottom 1b of the reaction tank 1. In the present embodiment, the liquid discharger 18 includes a liquid discharge pipe 18a and a liquid discharge valve 18b. The liquid discharger 18 may further include a liquid discharge pump (not shown). The liquid discharge pipe 18a is inserted into a through-hole formed in the bottom 1b of the reaction tank 1. As the liquid discharge pipe 18a, a pipe and/or a tube can be used, but the liquid discharge pipe 18a is not limited to these. The liquid discharge valve 18b is provided in the liquid discharge pipe 18a, and can open and close the flow path in the liquid discharge pipe 18a. As the liquid discharge valve 18b, an electromagnetic valve can be used, but the liquid discharge valve 18b is not limited to this.

The liquid discharge pipe 18a is an optional element, and may be omitted. In this case, the liquid discharge valve 18b may be directly attached to the reaction tank 1. Not only the liquid discharge pipe 18a but also the liquid discharge valve 18b may be omitted. That is, the liquid discharger 18 may be omitted. In this case, for example, an operator may open the lid 5 and scoop up the reaction liquid 13a from the opening of the reaction tank 1 to discharge the reaction liquid 13a from the reaction tank 1.

The controller 19 is composed of an electronic circuit. The controller 19 may be composed of a processor and a memory in which instructions are stored. In this case, the processor functions as the controller 19 when an instruction is executed.

The controller 19 can control the agitator 2, the light source 8, the cooler 10, the liquid discharger 18, and the air pump 20 based on input signals from the liquid surface sensor 11, the temperature sensor 17, the dissolved oxygen meter 28, and the oxygen concentration meter 27. To be specific, the controller 19 causes the liquid discharger 18 to discharge the reaction liquid 13a so that the height of the gas-liquid interface 12 detected by the liquid surface sensor 11 will not exceed a predetermined upper limit height. Moreover, the controller 19 causes the cooler 10 to cool the reaction liquid 13a so that the temperature detected by the temperature sensor 17 will coincide with a predetermined temperature. The controller 19 includes a timer for measuring the light irradiation time of the light source 8. If the light irradiation time measured by the timer reaches a predetermined time, the controller stops light irradiation by the light source 8, agitation by the agitator 2, and cooling by the cooler 10. A method for stopping light irradiation by the light source 8 is not particularly limited. For example, light irradiation may be stopped by stopping supply of electric power to the light source 8, or may be stopped by covering the light source 8 with a light shield moved to surround the light source 8.

For example, the controller 19 causes the air pump 20 to supply a gas based on the dissolved oxygen concentration measured by the dissolved oxygen meter 28. For example, the controller 19 causes the air pump 20 to supply a gas based on the oxygen concentration measured by the oxygen concentration meter 27. For example, the controller 19 supplies a gas to the air pump 20 based on the height of the liquid surface measured by the liquid surface sensor 11. With the configuration illustrated in Fig. 4, the controller 19 can control the agitator 2, the light source 8, the cooler 10, the liquid discharger 18, and the on-off valve 16 based on input signals from the liquid surface sensor 11, the temperature sensor 17, the dissolved oxygen meter 28, and the oxygen concentration meter 27. That is, the controller 19 may control the on-off valve 16, instead of the air pump 20.

In the food processing apparatus 100 configured as described above, the inside of the reaction tank 1 is configured to be hermetic. That is, the food processing apparatus 100 can set a state (hereafter, referred to as a hermetic state) in which a gas outside the food processing apparatus 100 (hereafter, referred to as the outside gas) cannot flow into the reaction tank 1 and spaces communicating with the reaction tank 1 (in the present embodiment, the spaces in the gas container 14 and the communication pipe 15). The meaning of the phrase "configured to be hermetic" includes, in addition to the meaning that the hermetic state is constantly maintained, the meaning that the hermetic state and a non-hermetic state are controllable.

### [Method of Operating Food Processing Apparatus]

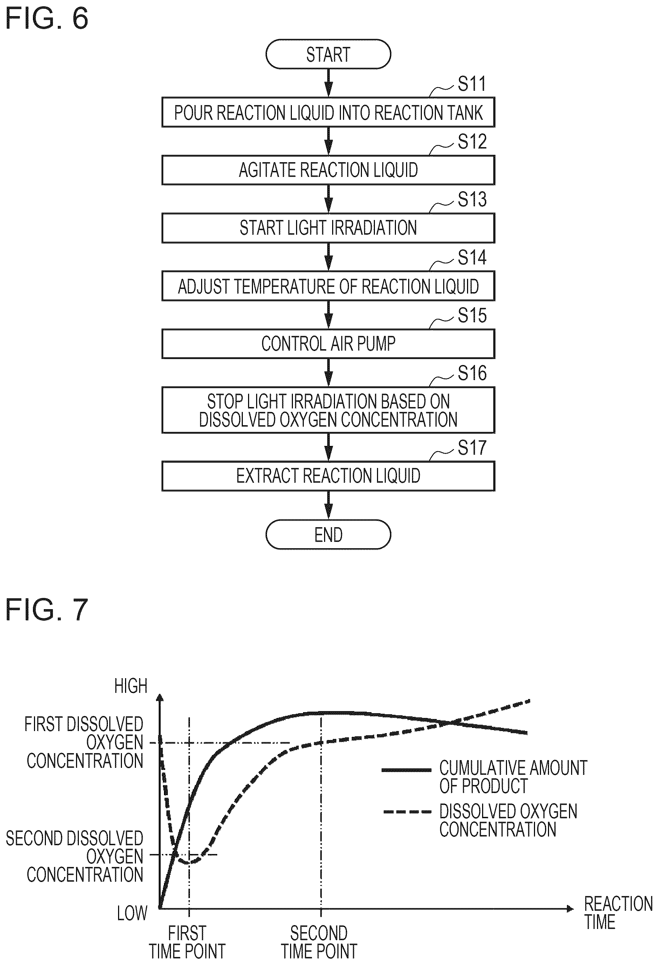

Next, referring to Fig. 6, a method of operating the food processing apparatus 100 will be described. Fig. 6 is a flowchart illustrating the method of operating the food processing apparatus 100 according to the present embodiment.

First, the reaction liquid 13a is poured into the reaction tank 1 (S11). At this time, the reaction liquid 13a is poured so that the gas-liquid interface 12 will not exceed a predetermined upper limit height. Thus, the space 13b in the reaction tank 1 can have a sufficient volume.

For example, when the reaction liquid 13a is automatically poured into the reaction tank 1 by using a pump or the like, the pump is controlled based on the amount of the reaction liquid 13a measured by the liquid surface sensor 11. For example, when the reaction liquid 13a is manually poured by an operator, the amount of the reaction liquid 13a measured by the liquid surface sensor 11 may be displayed.

Next, the controller 19 agitates the reaction liquid 13a by activating the agitator 2 (S12). Thus, contact between the reaction liquid 13a and the reaction pipe 7 is improved to improve reactivity.

Next, the controller 19 causes the light source 8 of the catalytic reactor 6 to emit light to start irradiating the thin film layer 9 of photocatalyst, which is outside of the reaction pipe 7, with light from inside of the reaction pipe 7 (S13). When the thin film layer 9 of photocatalyst is irradiated with light, excitons are generated in the thin film layer 9. The generated excitons react with dissolved oxygen and water molecules in the reaction liquid 13a to generate radicals. The radicals and excitons generated in this way accelerate reactions of organic components of the ingredient in the vicinity of the thin film layer 9 of photocatalyst, and the modification reaction of the ingredient progresses.

The controller 19 supplies a cooling medium to the cooler 10 (S14). The controller 19 detects the temperature of the reaction liquid 13a by using the temperature sensor 17, and adjusts the temperature and the supply amount of the cooling medium so that the temperature of the reaction liquid 13a will become a predetermined temperature. It is possible to adjust the temperature and the supply amount of the cooling medium by using, for example, a constant-temperature water circulator (not shown) or the like. Thus, it is possible to reduce the effect of heat on the catalytic reactor 6 and the reaction liquid 13a due to generation of heat by the light source 8.

For example, to modify a beer ingredient, it is desirable that the beer ingredient be aged at a low temperature (for example, about 5°C). Accordingly, the controller 19 controls the cooler 10 so that the temperature of the reaction liquid 13a will become 5°C. For example, to produce vinegar, it is desirable to perform fermentation at a temperature in the range of 20 to 30°C, and the controller 19 controls the cooler 10 so that the temperature of the reaction liquid 13a will fall within the range of 20 to 30°C. In modification of a beer ingredient, it is possible to shorten the period required for fermentation by decomposing sugar contents in wort beforehand. In production of vinegar, it is possible to shorten the period required for brewing by oxidizing an aldehyde, which is generated during production, into a carboxylic acid.

Moreover, the controller 19 controls the liquid discharger 18 so that the gas-liquid interface 12 will not exceed the upper limit height as the reaction liquid 13a increases due to condensation. The present step is an optional step, and may be omitted.

Next, the controller 19 controls the air pump 20 in a state in which the thin film layer 9 of photocatalyst is irradiated with light (S15). To be specific, the controller 19 controls the amount and the flow rate of a gas supplied by the air pump 20 to suppress decrease of the oxygen concentration in the space 13b in the reaction tank 1 while suppressing condensation in the reaction tank 1. For example, the controller 19 causes the air pump 20 to supply a gas so that the dissolved oxygen concentration measured by the dissolved oxygen meter 28 will exceed a predetermined dissolved oxygen concentration (a second dissolved oxygen concentration, which will be described below in detail). For example, the controller 19 causes the air pump 20 to supply a gas so that the oxygen concentration measured by the oxygen concentration meter 27 will exceed a predetermined oxygen concentration. For example, the controller 19 supplies a gas to the air pump 20 if the height of the liquid surface detected by the liquid surface sensor 11 exceeds a predetermined liquid surface height. Steps S12 to S15 need not be performed in this order, and may be performed in a changed order. Steps S12 to S15 may be performed simultaneously.

If the dissolved oxygen concentration measured by the dissolved oxygen meter 28 satisfies a predetermined condition after light irradiation by the light source 8 has been started, the controller 19 stops agitation by the agitator 2, light irradiation by the light source 8, and cooling by the cooler 10 (S16).

Here, the control performed in step S16 to stop the reaction will be described while describing the relationship between the dissolved oxygen concentration and the cumulative amount of product in a catalytic reaction in the food processing apparatus 100. Fig. 7 is a graph illustrating the change over time of the cumulative amount of product and the dissolved oxygen concentration. In the graph of Fig. 7, the numerical value (that is, the cumulative amount or the concentration) increases upward along the vertical axis, and the numerical value decreases downward along the vertical axis. In the graph of Fig. 7, the left end of the horizontal axis is immediately after light irradiation is started, and the reaction time elapses toward the right end. The graph of Fig. 7 is an example, and the graph changes in accordance with the following conditions: the combination of a starting material of the reaction and a catalytic chemical compound, the concentration of a starting material in liquid, temperature, humidity, pressure, reaction scale, and the like. In the present embodiment, in order to determine a predetermined condition for stopping the reaction from the graph illustrated in Fig. 7, it is necessary to: perform a preliminary test for investigating the trend in which the graph changes in accordance with the reaction conditions as described above; make a graph similar to that illustrated in Fig. 7; and then determine the predetermined condition.

For example, when the starting material is an aldehyde (acetaldehyde), the target product is a carboxylic acid (acetic acid) that is obtained by oxidizing the aldehyde in a photocatalytic reaction. In the modification reaction, since the carboxylic acid, which has been generated by oxidation, is less easily oxidized than the aldehyde, consumption of dissolved oxygen is suppressed as the amount of the aldehyde decreases, and the dissolved oxygen concentration increases as the reaction progresses. That is, it is possible to detect the progress of the target reaction by detecting increase of the dissolved oxygen concentration, and it is possible to stop the operation of the food processing apparatus 100 at an appropriate timing. The carboxylic acid is also oxidized in the photocatalytic reaction although by a smaller amount than the aldehyde, if irradiation of the photocatalyst with light is continued after the aldehyde has decreased, the carboxylic acid, which is the target product, also decreases due to a side reaction.

In the present embodiment, the ratio of the side reaction to the main reaction is estimated from a change in the dissolved oxygen concentration, the oxidation reaction of the carboxylic acid, which is the side reaction, is suppressed to the minimum, and the operation of the food processing apparatus 100 is stopped. The dissolved oxygen concentration at which the reaction is to be stopped may be set based on the dissolved oxygen concentration at a timing when the target product is effectively obtained, by measuring the correlation between the concentration of the starting material and the dissolved oxygen concentration in the reaction liquid after the photocatalyst has been irradiated with light in the food processing apparatus 100 to be used.

This will be described by using the example illustrated in Fig. 7. As illustrated in Fig. 7, the starting material is modified by a photocatalytic reaction to accumulate a target reaction product in the system. At this time, the dissolved oxygen concentration measured by the dissolved oxygen meter 28 changes as follows. First, in the period from the start of light irradiation to a first time point, generation of the product of the main reaction progresses, since a large amount of starting material exists in the system. As the main reaction progresses, oxygen is consumed, and thus the dissolved oxygen concentration decreases sharply. Here, if the dissolved oxygen concentration decreases more than necessary, it is probable that the reaction rate of the main reaction will decrease due to decrease of the dissolved oxygen concentration. In the present embodiment, the controller 19 causes the air pump 20 to supply a gas so that the dissolved oxygen concentration measured by the dissolved oxygen meter 28 will exceed a predetermined second dissolved oxygen concentration. In other words, the controller 19 increases the dissolved oxygen concentration by controlling the air pump 20 if the measured dissolved oxygen concentration falls below the predetermined second dissolved oxygen concentration.

While the air pump 20 is supplying the gas, as the starting material is consumed to a certain degree in the system and the reaction rate decreases, the dissolved oxygen concentration increases in the period from the first time point to the second time point. Even if the air pump 20 does not supply the gas, as the starting material is consumed to a certain degree in the system and the reaction rate decreases, the dissolved oxygen concentration starts to increase at some timing, although the timing of turning to increase may vary. In this way, when the starting material is modified by using oxygen and a photocatalyst, the oxygen concentration changes by first decreasing and then increasing. The cumulative amount of product at the second time point is the maximum amount.

That is, dissolved oxygen decreases, increases after decreasing, and subsequently the cumulative amount of product becomes the maximum. It can be seen that the cumulative amount of product gradually decreases after the second time point. This is supposed to occur because the side reaction, in which the product is subjected to a reaction again and changes into a by-product, progresses dominantly over the main reaction. Therefore, agitation by the agitator 2, light irradiation by the light source 8, and cooling by the cooler 10 may be stopped (S16) at the second time point, when the cumulative amount of product becomes the maximum.

After making the graph illustrated in Fig. 7 in the preliminary test, the dissolved oxygen concentration at the second time point, when the cumulative amount of product becomes the maximum, is used as a threshold (first dissolved oxygen concentration). To be specific, the controller 19 starts step S16 if the dissolved oxygen concentration measured by the dissolved oxygen meter 28 exceeds a predetermined first dissolved oxygen concentration. In particular, as described above, when the main reaction progresses normally, the dissolved oxygen concentration decreases once, increases after decreasing, and subsequently reaches the first dissolved oxygen concentration at which the cumulative amount of product is the maximum. Therefore, in the present embodiment, the controller 19 starts step S16 if decrease of the dissolved oxygen concentration and increase after the decrease are detected and the dissolved oxygen concentration exceeds the predetermined first dissolved oxygen concentration.

The controller 19 detects increase and decrease of the dissolved oxygen concentration by calculating the amount of change over time of the dissolved oxygen concentration by using dissolved oxygen concentrations at two consecutive measurement points. To be more specific, the controller 19 detects decrease (or increase) of the dissolved oxygen concentration by determining whether or not the calculated amount of change is greater than a threshold that can be regarded to reflect a sufficient decrease (or increase).

In this way, by adding decrease of dissolved oxygen concentration and increase after the decrease to the predetermined condition, an advantageous effect is obtained in that it is easy to avoid a situation in which the normal reaction does not occur and the product is not accumulated while the dissolved oxygen concentration exceeds the first dissolved oxygen concentration. Moreover, there may be a case where the dissolved oxygen concentration exceeds the first dissolved oxygen concentration the instant that light irradiation is started. Also in this case, by adding decrease of dissolved oxygen concentration and increase after the decrease to the predetermined condition as described above, it is possible to prevent step S16 from being started, since the predetermined condition is not satisfied even if the dissolved oxygen concentration exceeds the first dissolved oxygen concentration the instant that light irradiation is started.

Conversely, if the dissolved oxygen concentration does not decrease or the dissolved oxygen concentration does not fall below the second dissolved oxygen concentration, it is probable that the reaction is different from a normal reaction in terms of consumption of oxygen, and thus it may be determined that the reaction is abnormal. For example, if the dissolved oxygen concentration does not decrease or if the dissolved oxygen concentration does not fall below the second dissolved oxygen concentration although decrease of dissolved oxygen concentration is detected, the controller 19 may determine that the reaction system, that is, at least one of the food processing apparatus 100 and the reaction liquid 13a is abnormal, and may output abnormality information. The outputted abnormality information may be displayed on a display (not shown) of the controller 19, or may be transmitted to and displayed on a terminal of an administrator or the like via communication. In addition to outputting of the abnormality information, the controller 19 may start step S16.

As described above, it is possible to add decrease of the dissolved oxygen concentration and increase after the decrease to the predetermined condition. However, since the determination process is complicated, as a simpler method instead of this, it is also possible to perform determination based on elapsed time as follows. That is, step S16 may be started if the dissolved oxygen concentration exceeds the first dissolved oxygen concentration after the light irradiation time passes a certain time point (first light irradiation time) that is after the first time point and before the second time point. Thus, step S16 is not started even if the dissolved oxygen concentration exceeds the first dissolved oxygen concentration before the first time point.

Use of determination based on elapsed time in this way not only has an advantage that determination is simplified as described above but also an advantage that it is easy to set the first light irradiation time, which is a threshold. To be specific, since the photocatalyst deteriorates with each reaction, the reaction rate extends with each operation. That is, the second time point in a new operation is later than the second time point in a past operation. Then, the second time point in a past operation may be set as the first light irradiation time, and determination based on the first dissolved oxygen concentration may be performed after that. The second time point in a past operation, that is, an irradiation time representing an elapsed time from start to stop of light irradiation in a past operation of the food processing apparatus 100 is stored, for example, in the storage 31. The controller 19 may set the irradiation time in an operation a predetermined period or more ago as the first light irradiation time. The "operation a predetermined period or more ago" may be an operation immediately before the present time, or, if deterioration of photocatalyst is gradual and the difference in reaction rate between the cycles of operations is slight, may be an operation six cycles or eleven cycles ago, which are before predetermined cycles, such as five cycles or ten cycles, ago.

On the other hand, in addition to the determination using the elapsed time, abnormality of the reaction may be detected. For example, if the reaction rate is clearly low, it is probable that the reaction differs from a normal reaction, and thus it may be determined that the reaction is abnormal. An example of such a case is a case where, for example, the measured dissolved oxygen concentration does not exceed the first dissolved oxygen concentration even when the light irradiation time becomes longer than the second light irradiation time that is sufficiently longer than the first light irradiation time. The second light irradiation time is preset as a period from start of light irradiation to a time point that is sufficiently later than the second time point in the past (for example, a time point sufficiently later in consideration of the deterioration speed of photocatalyst). If such a condition is satisfied, it may be determined that the reaction system, that is, at least one of the food processing apparatus 100 and the reaction liquid 13a is abnormal, and abnormality information indicating the abnormality may be output. The outputted abnormality information may be displayed on a display (not shown) of the controller 19, or may be transmitted to and displayed on a terminal of an administrator or the like via communication. In addition to outputting of the abnormality information, the controller 19 may start step S16.

In this way, by starting and stopping agitation, light irradiation, and cooling in accordance with the dissolved oxygen concentration, the food processing apparatus 100 can efficiently modify an ingredient by irradiating a photocatalyst with light.

After step S16 has finished, the controller 19 opens the liquid discharge valve 18b of the liquid discharger 18 to extract the reaction liquid 13a from the reaction tank 1 (S17), and finishes food processing by the series of modification reactions.

### (Other Embodiments)

Heretofore, a food processing apparatus according to an aspect of the present disclosure and a method of operating the food processing apparatus have been described based on embodiments. However, a food processing apparatus and a method of operating the food processing apparatus according to the present disclosure are not limited to the embodiments. The present disclosure also includes other embodiments that are realized by combining any elements in the embodiments described above and modifications that are obtained by modifying the embodiments in various ways within a range such that a person ordinary skill in the art can conceive within the gist of the present disclosure.

### Industrial Applicability

An aspect of the present disclosure is applicable to a food processing apparatus and a method of operating a food processing apparatus that, for example, modify a food ingredient by using a photocatalyst.

### Reference Signs List

1 reaction tank
1a side wall
1b bottom
2 agitator
3 rotation shaft
4 impeller
5 lid
5a, 5b through-hole
6 catalytic reactor
7 reaction pipe
8 light source
9 thin film layer
10 cooler
11 liquid surface sensor
12 gas-liquid interface
13a reaction liquid
13b space
14 gas container
15 communication pipe
16 on-off valve
17 temperature sensor
18 liquid discharger
18a liquid discharge pipe
18b liquid discharge valve
19 controller
20 air pump
21, 30 gas supply pipe
22 gas discharger
22a gas discharge pipe
22b check valve
24 dehumidifier
25 temperature adjuster
26 drain
27 oxygen concentration meter
28 dissolved oxygen meter
31 storage
100 food processing apparatus

## Claims

1. A food processing apparatus comprising:
a reaction tank that contains a reaction liquid including a food ingredient;
a reaction pipe that is disposed in the reaction tank and on whose outer surface a photocatalyst is provided;
a light source that irradiates the photocatalyst with light from inside of the reaction pipe;
a dissolved oxygen concentration measurer that measures a dissolved oxygen concentration in the reaction liquid; and
a controller that stops light irradiation from the light source if a measured dissolved oxygen concentration exceeds a preset first dissolved oxygen concentration.

2. The food processing apparatus according to claim 1,
wherein the controller stops light irradiation from the light source if decrease of the measured dissolved oxygen concentration is detected, increase of the measured dissolved oxygen concentration is detected after detection of the decrease, and the measured dissolved oxygen concentration exceeds the first dissolved oxygen concentration after detection of the increase.

3. The food processing apparatus according to claim 1,
wherein the controller stops light irradiation from the light source if the measured dissolved oxygen concentration exceeds the first dissolved oxygen concentration after a time for which light irradiation is performed becomes longer than a preset first light irradiation time.

4. The food processing apparatus according to claim 3, further comprising:
a storage that stores an irradiation time representing an elapsed time from start to stop of light irradiation in a past operation of the food processing apparatus,
wherein the controller sets, as the first light irradiation time, the irradiation time in an operation of the food processing apparatus a predetermined period or more ago stored in the storage.

5. The food processing apparatus according to claim 3,
wherein the controller outputs abnormality information indicating abnormality of at least one of the food processing apparatus and the reaction liquid if the measured dissolved oxygen concentration does not exceed the first dissolved oxygen concentration even when the time for which light irradiation is performed becomes longer than a preset second light irradiation time that is longer than the first light irradiation time.

6. The food processing apparatus according to claim 1, further comprising:
a gas supplier that supplies an oxygen-containing gas into the reaction tank,
wherein the controller controls the gas supplier to cause the gas supplier to supply the oxygen-containing gas into the reaction tank.

7. The food processing apparatus according to claim 6,
wherein the controller controls the gas supplier to cause the gas supplier to supply the oxygen-containing gas into the reaction tank if the measured dissolved oxygen concentration falls below a preset second dissolved oxygen concentration that is lower than the first dissolved oxygen concentration.

8. The food processing apparatus according to claim 7,
wherein the controller outputs abnormality information indicating abnormality of at least one of the food processing apparatus and the reaction liquid if decrease of the measured dissolved oxygen concentration is not detected or if decrease of the measured dissolved oxygen concentration is detected and the measured dissolved oxygen concentration does not fall below the second dissolved oxygen concentration after detection of the decrease.

9. The food processing apparatus according to claim 1, further comprising:
a temperature adjuster that adjusts a temperature of the reaction liquid contained in the reaction tank.

10. The food processing apparatus according to any one of claims 1 to 9, further comprising:
an agitator that agitates a reactant in the reaction tank.

11. A method of operating a food processing apparatus,
the apparatus including
a reaction tank that contains a reaction liquid including a food ingredient,
a reaction pipe that is disposed in the reaction tank and on whose outer surface a photocatalyst is provided,
a light source that irradiates the photocatalyst with light from inside of the reaction pipe, and
a dissolved oxygen concentration measurer that measures a dissolved oxygen concentration in the reaction liquid,
the method comprising:
stopping light irradiation from the light source if a measured dissolved oxygen concentration exceeds a preset first dissolved oxygen concentration.

12. A method of operating a food processing apparatus,
the apparatus including
a reaction tank that contains a reaction liquid including a food ingredient,
a photocatalyst that is disposed in the reaction tank,
a light source that irradiates the photocatalyst with light, and
a dissolved oxygen concentration measurer that measures a dissolved oxygen concentration in the reaction liquid,
the method comprising:
stopping light irradiation from the light source if a measured dissolved oxygen concentration exceeds a preset first dissolved oxygen concentration.
